# EUROPEAN PATENT SPECIFICATION

(11) **EP 3 656 602 B1**
(45) Date of publication and mention of the grant of the patent: **28.04.2021**
(21) Application number: 19209048.8
(22) Date of filing: 14.11.2019
(51) Int. Cl.: B60L 53/12, H01G 2/10, H01G 4/38, H01G 4/40, B60L 9/08

(54) **CAPACITOR UNIT FOR CONTACTLESS POWER TRANSMISSION SYSTEM**
KONDENSATOREINHEIT FÜR SYSTEM ZUR KONTAKTLOSEN STROMÜBERTRAGUNG
UNITÉ DE CONDENSATEUR POUR SYSTÈME D'ALIMENTATION EN ÉNERGIE ÉLECTRIQUE SANS CONTACT

(30) Priority: 15.11.2018 JP 2018214757
(43) Date of publication of application: 27.05.2020
(73) Proprietor: Daihen Corporation, Osaka 532-8512 (JP)
(72) Inventor: Tanaka, Junichi, Osaka-shi Osaka 532-8512 (JP); Tsukiyama, Daisuke, Osaka-shi Osaka 532-8512 (JP); Idogaki, Takumi, Osaka-shi Osaka 532-8512 (JP)
(74) Representative: Manitz Finsterwald Patent- und Rechtsanwaltspartnerschaft mbB

(56) References cited:
- WO-A1-2015/144619
- JP-A- 2017 084 865
- US-A1- 2016 268 847
- US-B1- 6 265 791

## Description

The present invention relates to a capacitor unit.

In a contactless power supply system, the longer a parallel transmission line is, the greater the impedance thereof becomes. The increase of the impedance could affect the electric power reception efficiency. In order to reduce the impedance, it is desirable to increase the number of capacitors connected to the parallel transmission line.

However, if the number of capacitors is increased, the increased capacitors could obstruct the traveling of automated guided vehicles on an electric power reception side. With the foregoing in view, it is an object of the present invention to provide a capacitor unit in which a capacitor and a connection unit can compactly be arranged.

US 2016/0268847 A1 discloses a capacitor unit according to the preamble of claim 1. US 2016/0268847 A1 and JP 2017-84865 A disclose capacitor units comprising coils and connectable to a power source via an ordinary single power supply line.

A capacitor unit according to the present invention is connected to a parallel transmission line that comprises a pair of conductors extending parallel to each other and supplies power from a power supply apparatus to an electric power reception side in a contactless manner. The capacitor unit includes: a capacitor that is connectable to the parallel transmission line; and a capacitor plate in which a cavity is formed. The cavity accommodates the capacitor and a connection unit that connects the capacitor and the parallel transmission line.

According to this aspect, the capacitor can compactly be arranged. In addition, the impedance of the parallel transmission line can be reduced, and a load applied to the capacitor can be distributed.

In the above aspect, the cavity may be filled with a filler so as to seal the capacitor and the connection unit.

If the capacitor unit becomes compact, there arises a possibility that workers or the like step on the capacitor unit. According to this aspect, since the capacitor and the connection unit thereof can be protected by the filler, even if the capacitor unit is stepped on, damage can be suppressed, and breakage of the capacitor and the connection unit can be prevented.

In the above aspect, a protective cover that is attached to the capacitor plate and covers the cavity may further be arranged.

According to this aspect, since the protective cover can protect the capacitor and the connection unit, even if the capacitor unit is stepped on, damage can be suppressed, and breakage of the capacitor and the connection unit can be prevented. In addition, by covering with the protective cover, the appearance of the capacitor unit will be improved.

In the above aspect, the capacitor may be a pair of capacitor substrates which are separately connected to corresponding conductors, respectively. In the capacitor plate, a pair of the cavities may be formed along each of the external shapes of the capacitor substrates.

According to this aspect, since the space for accommodating the individual capacitor substrate and the connection unit thereof can be secured in the cavity, comparing to a case where space is secured by inserting a spacer between two capacitor plates, a fewer number of components are needed.

In the above aspect, capacitor-side connectors may be provided at one end of the capacitor and the other end opposite to the one end. Each of the capacitor-side connectors may be configured to be connectable either to a parallel transmission line-side connector provided at a terminal end of the parallel transmission line or to an end connector connecting a pair of the adjacent capacitors.

According to this aspect, the same capacitor can be used for two purposes, namely, for connecting the parallel transmission line-side connector and for connecting the end connector.

In the above aspect, each of the one end and the other end of the capacitor may be configured to be connectable either to a side of the power supply apparatus or to a side of the end connector which is located on the opposite side of the power supply apparatus.

According to this aspect, since there is no need to distinguish the orientation of the capacitor, the workload of workers who assemble the capacitor unit or a power transmission apparatus including the capacitor unit can be reduced.

According to the present invention, the capacitor unit in which the capacitor is compactly arranged can be provided.

FIG. 1 is a schematic diagram illustrating an example of a contactless power supply system according to an embodiment of the present invention;
FIG. 2 is a circuit diagram illustrating an example of the contactless power supply system according to an embodiment of the present invention;
FIG. 3 is a perspective view of an example of a power transmission apparatus according to an embodiment of the present invention;
FIG. 4 is a plan view of a parallel transmission line unit of FIG. 3, in which part of the unit is illustrated in an exploded manner;
FIG. 5 is a plan view of an end capacitor unit of FIG. 3, in which part of the unit is illustrated in an exploded manner;
FIG. 6 illustrates an example of a capacitor and a connection unit of the capacitor;
FIG. 7 illustrates an example of an end portion of a conductor;
FIG. 8 is a perspective view of a capacitor plate illustrated in FIG. 5;
FIG. 9 is an exploded sectional view of a capacitor unit taken in the direction transverse to the parallel transmission line;
FIG. 10 is a plan view of the end capacitor unit in which the orientation of the capacitor is inverted in the extending direction of the parallel transmission line;
FIG. 11 is a plan view of an intermediate capacitor unit of FIG. 3, in which part of the unit is illustrated in an exploded manner; and
FIG. 12 is a perspective view of a capacitor plate illustrated in FIG. 11.

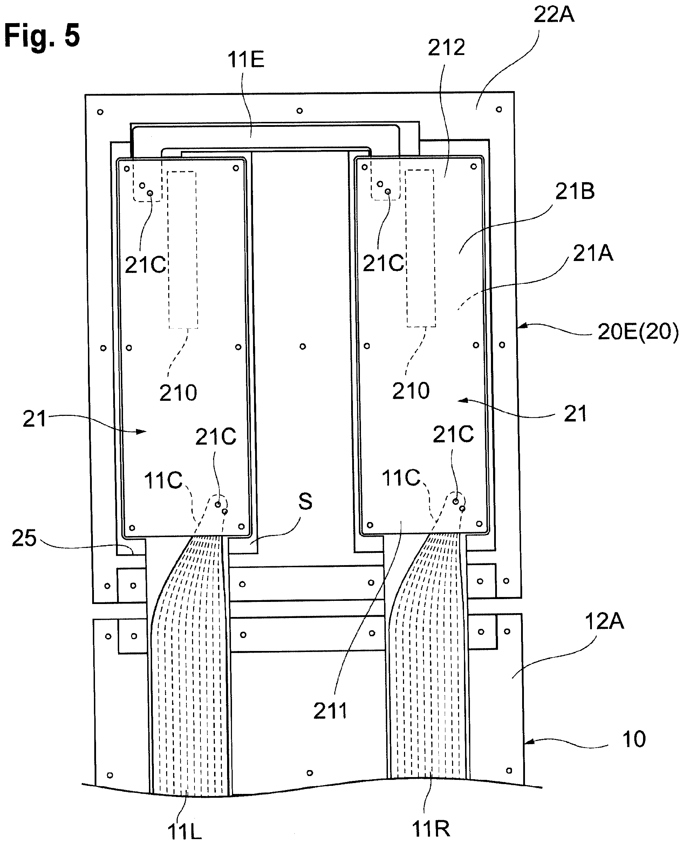

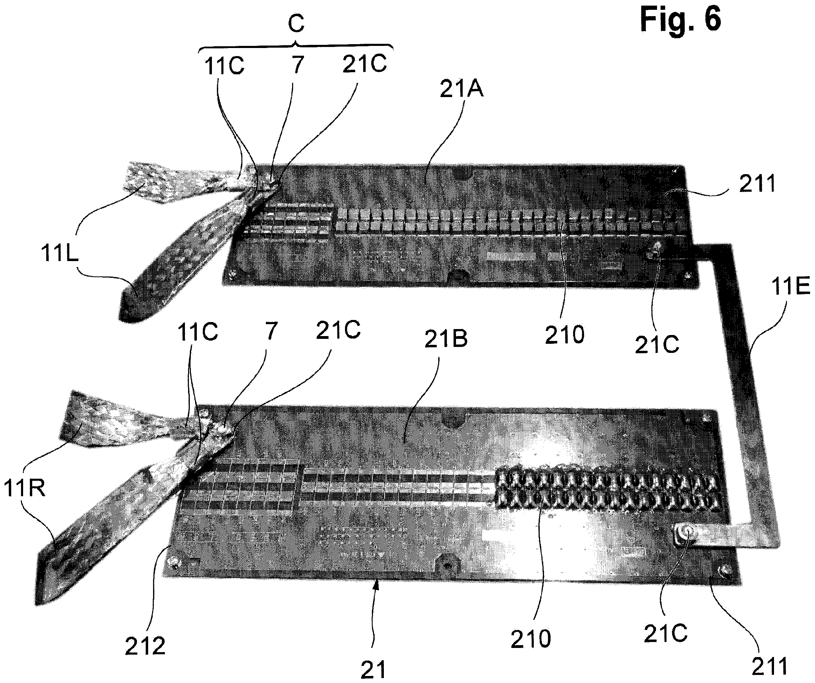

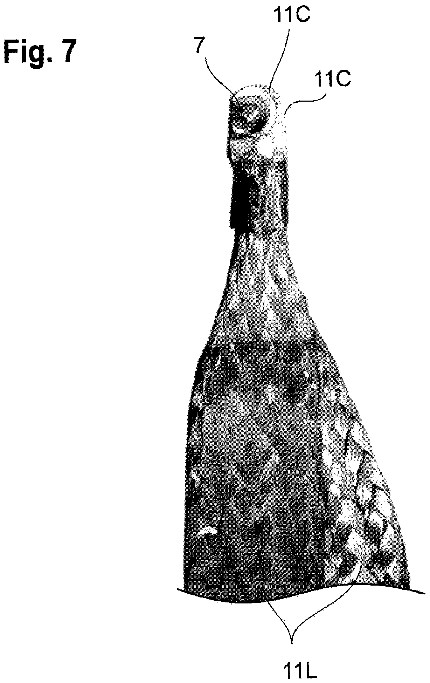

A preferred embodiment of the present invention will be described with reference to the accompanying drawings. In each drawing, constituent elements denoted by the same reference character have the same or equivalent configuration. A capacitor unit 20 according to an embodiment of the present invention is characterized in that a capacitor 21 and a connection unit C of the capacitor 21 are compactly arranged in a capacitor plate 22 (see FIG. 5). For example, the connection unit C includes a capacitor-side connector 21C provided at an end portion of the capacitor 21 (see FIG. 6), a parallel transmission line-side connector 11C provided at an end portion of a parallel transmission line 11 (see FIG. 7), a fastening screw 7 for connecting the capacitor-side connector 21C and the parallel transmission line-side connector 11C, etc.

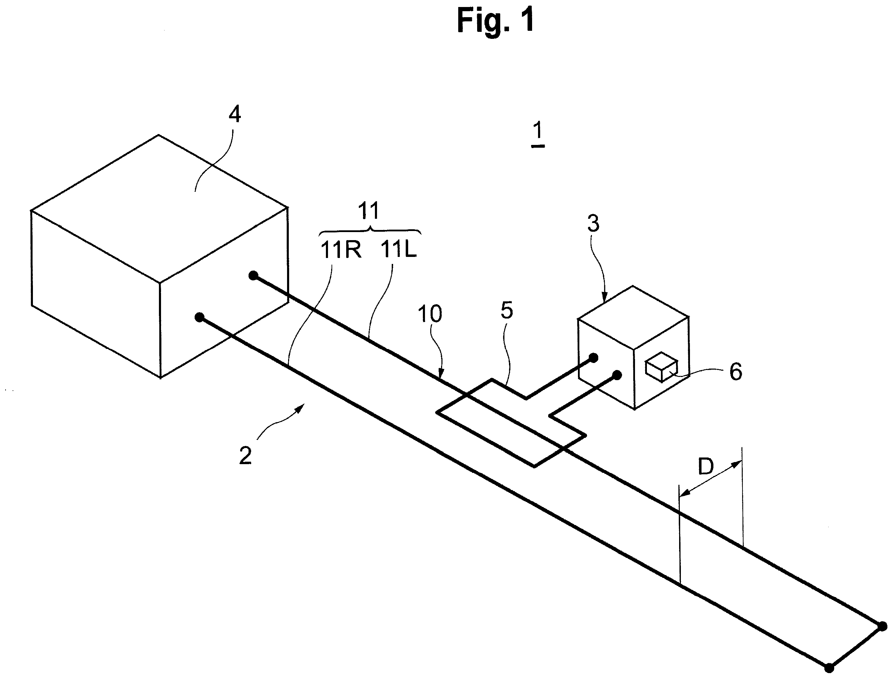

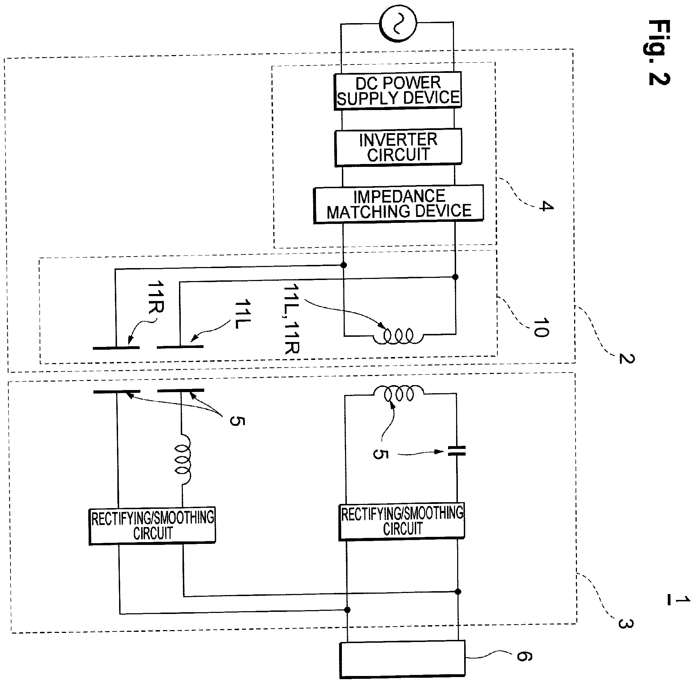

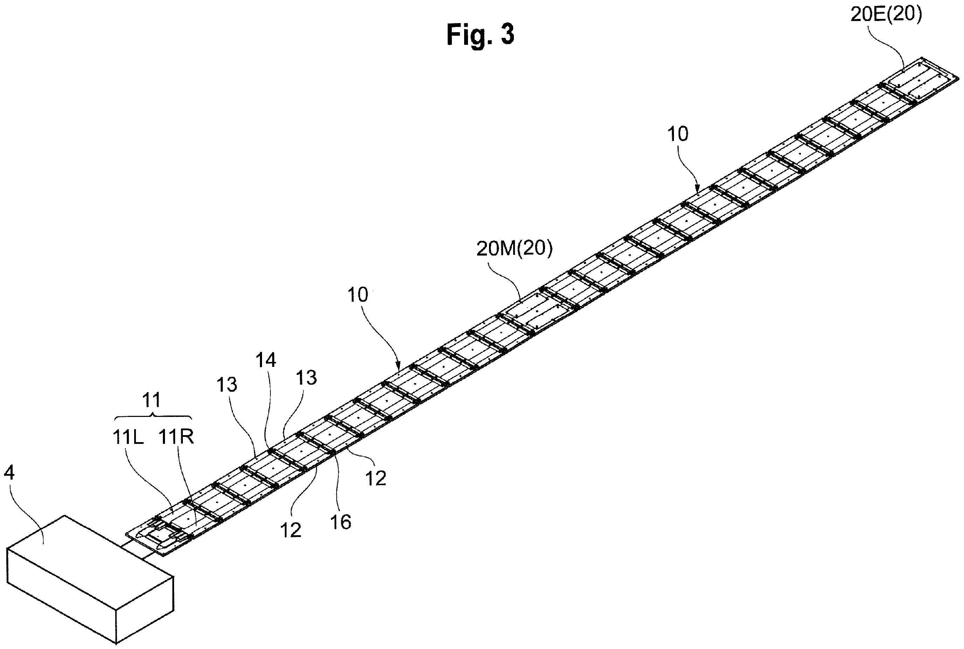

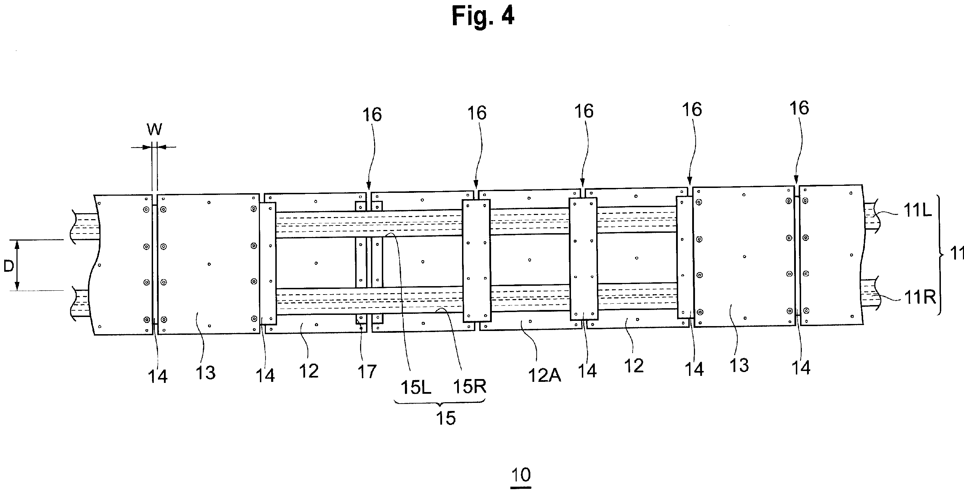

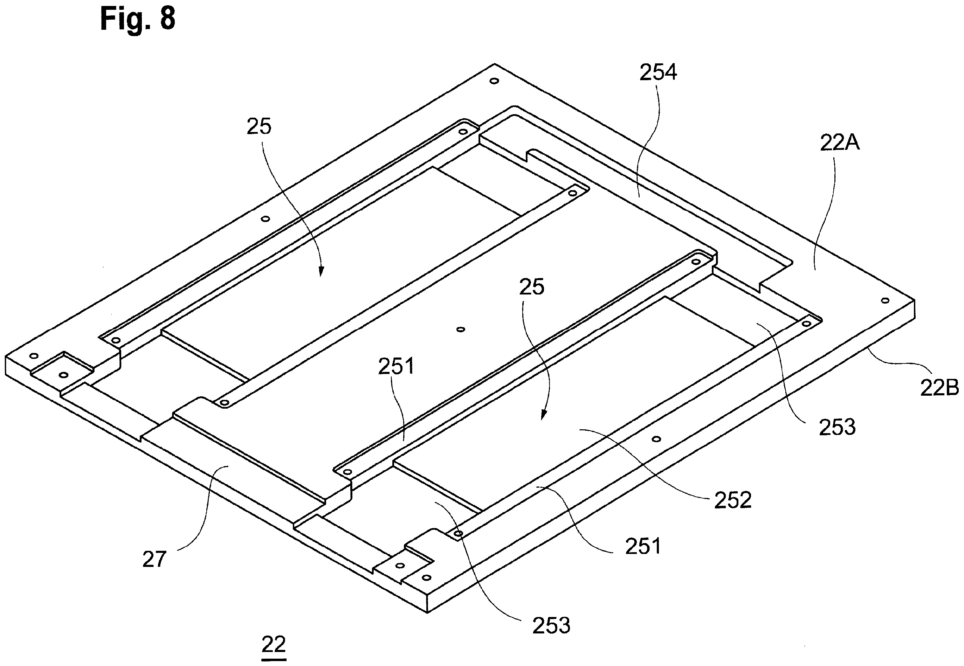

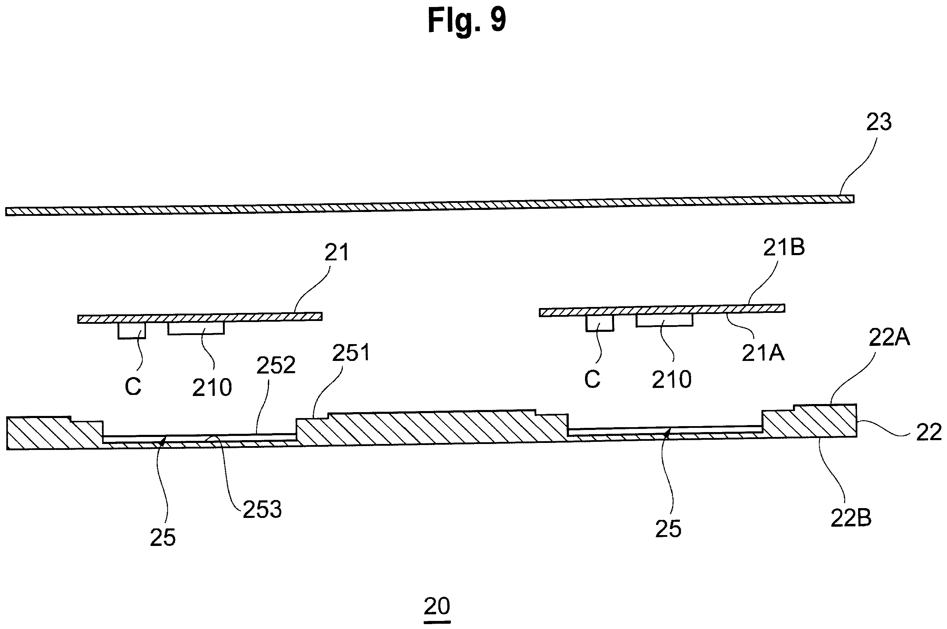

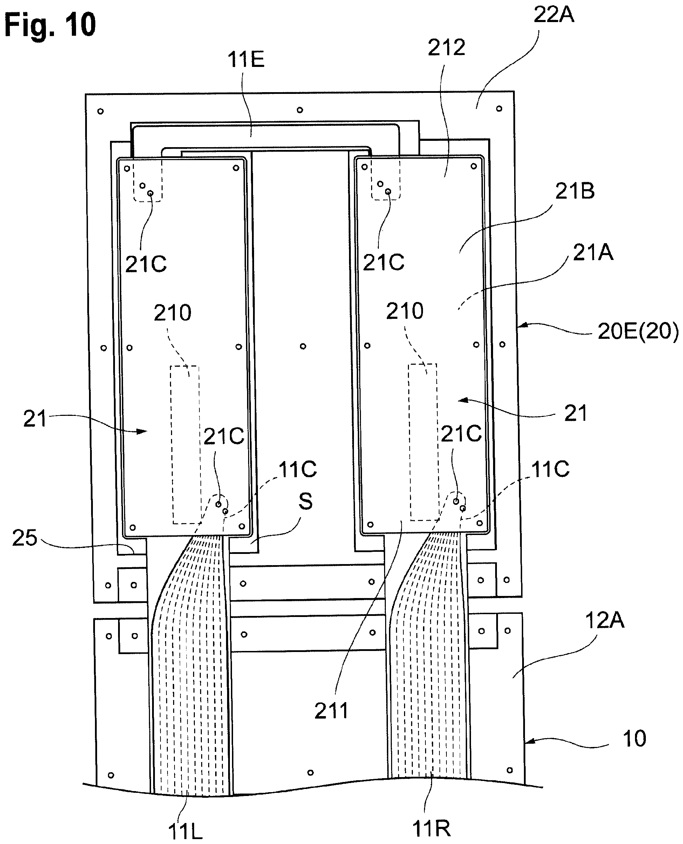

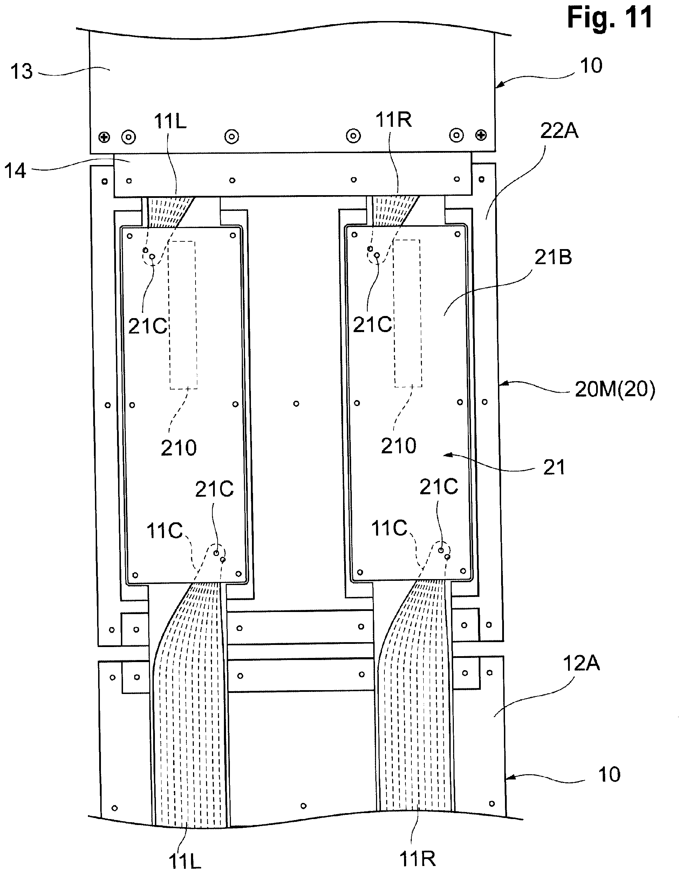

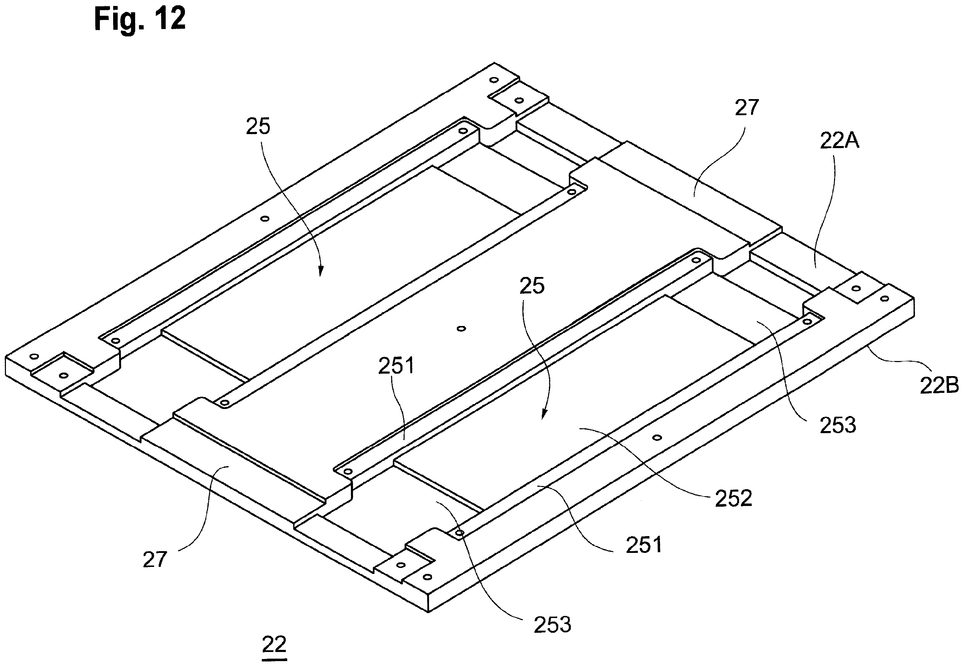

The capacitor plate 22 (see FIGS. 8 and 12) is formed to have approximately the same thickness (see FIG. 9) as that of a guide plate 12 (see FIG. 4) that accommodates the parallel transmission line 11, and the traveling of a power reception apparatus 3, which is a mobile unit, is not obstructed. Since the capacitor-side connector 21C is configured to be connectable either to the above parallel transmission line-side connector 11C (see FIG. 11) or to an end connector 11E (see FIG. 5) mounted on a terminal end of a power transmission apparatus 2, the layout of the power transmission apparatus 2 (see FIGS. 1 and 2) can flexibly be designed (see FIG. 3). In addition, there is no need to distinguish the orientation of the capacitor 21 (see FIGS. 5 and 10), workability upon assembling the power transmission apparatus 2 is improved. Hereinafter, each configuration will be described in detail with reference to FIGS. 1 to 12.

FIG. 1 is a schematic diagram illustrating an example of a contactless power supply system 1 according to an embodiment of the present invention, and FIG. 2 is a circuit diagram illustrating an example of the contactless power supply system 1 according to an embodiment of the present invention. As illustrated in FIGS. 1 and 2, the contactless power supply system (wireless power supply system) 1 includes the power transmission apparatus 2 on the power transmission side and the power reception apparatus 3 on the power reception side. The power transmission apparatus 2 includes a power supply apparatus 4 that generates high-frequency power and a parallel transmission line unit 10 that supplies high-frequency power generated by the power supply apparatus 4 to the power reception apparatus 3.

The power supply apparatus 4 includes, for example, a direct-current (DC) power supply device, an inverter circuit, and an impedance matching device, and after converting commercial power supply into DC power by using the DC power supply device, the power supply apparatus 4 converts the converted DC power into predetermined high-frequency power by using the inverter circuit and the impedance matching device and outputs the converted high-frequency power to the parallel transmission line unit 10. The configuration of the power supply apparatus 4 is not particularly limited. As long as the power supply apparatus 4 can output the predetermined high-frequency power to the parallel transmission line unit 10, various kinds of apparatus may be used.

The power reception apparatus 3 is, for example, an automated guided vehicle and an electric vehicle and includes a coil 5 that is magnetically coupled to the parallel transmission line unit 10 and a load 6 that is a power storage device, etc. electrically connected to the coil 5. The power reception apparatus 3 may further include a rectifying and smoothing circuit, etc. that converts high-frequency power supplied to the coil 5 into DC power. The power reception apparatus 3 may be configured to directly drive the load 6 such as a motor with the DC power supplied from the rectifying and smoothing circuit. In this way, the power storage device may be omitted.

FIG. 3 is a perspective view of an example of the power transmission apparatus 2 according to an embodiment of the present invention. As illustrated in FIG. 3, the power transmission apparatus 2 includes the parallel transmission line unit 10 laid along a traveling route of the power reception apparatus 3, which is a mobile unit, and the capacitor unit 20 that reduces the impedance of the parallel transmission line unit 10. In the example illustrated, a plurality of parallel transmission line units 10 is connected with each other via an intermediate capacitor unit 20M. In addition, an end capacitor unit 20E is connected to the parallel transmission line unit 10 at the terminal end of the power transmission apparatus 2. The intermediate capacitor unit 20M and the end capacitor unit 20E are both examples of the capacitor unit 20.

The longer the parallel transmission line unit 10 becomes, the greater the inductance of the parallel transmission line unit 10 becomes, and consequently, the impedance thereof is increased. Failing to achieve the impedance matching with the power reception apparatus 3 due to the increase in the impedance of the parallel transmission line unit 10 causes a power loss of the contactless power supply system 1. If the capacitor unit 20 is connected in series to the parallel transmission line unit 10 to form a series resonant circuit, the impedance caused by the increase in the inductance of the parallel transmission line unit 10 offsets the impedance caused by the capacitor unit 20. As a result, the power loss of the contactless power supply system 1 is suppressed. As a well-known technique related to such a series resonant circuit, for example, Patent Publication JP-A-2014-236409 (DAIHEN Corporation) is cited.

FIG. 4 is a plan view of the parallel transmission line unit 10 of FIG. 3, in which part of the unit is illustrated in an exploded manner. As illustrated in FIG. 4, the parallel transmission line unit 10 includes the parallel transmission line 11 that is configured with a pair of conductors 11L and 11R which are bendable, a plurality of guide plates 12 that is attached to the parallel transmission line 11, protective covers 13 that cover the respective guide plates 12, and insulation covers 14 each of which covers interspace between the adjacent guide plates 12.

In the example illustrated, each of the conductors 11L and 11R is configured with a flat braided wire. Alternatively, one of the conductors, namely, the conductor 11L may include a plurality of flat braided wires (see FIG. 6). Likewise, the other conductor, namely, the conductor 11R may include a plurality of flat braided wires. Except for the parallel transmission line-side connector 11C which will be described below, the rest of the part of the flat braided wires may be covered with a cylindrical cover. The material of the bendable conductors 11L and 11R is not limited to the flat braided wire. Alternatively, a plurality of litz wires or the like which are formed by twisting enamel wires may be used. Various kinds of flexible and bendable electrical wires may be used as the conductors 11L and 11R.

As illustrated in FIG. 3, the pair of conductors 11L and 11R is connected to the end capacitor unit 20E at the terminal end of the power transmission apparatus 2. While not illustrated, the pair of conductors 11L and 11R may be short-circuited or insulated at the terminal end of the power transmission apparatus 2. The plurality of guide plates 12 is attached to the parallel transmission line 11 and controls a distance D between the pair of conductors 11L and 11R. The parallel transmission line 11 accommodated in the guide plates 12 may be sealed with a filler such as a potting resin and cement or may be protected by the protective covers 13.

In the parallel transmission line unit 10, a bending portion 16 that allows the parallel transmission line 11 to bend is provided in the space between the adjacent guide plates 12. The bending portion 16 is an area where the conductors 11L and 11R are not supported by the guide plates 12. An example of a width W of the bending portion 16 is a width that is approximately twice the thickness of the individual guide plate 12. In the example illustrated, the individual bending portions 16 are covered with the individual insulation covers 14. The insulation cover 14 is made of a flexible material such as silicone rubber and formed into a strip shape.

FIG. 5 is a plan view of the end capacitor unit 20E of FIG. 3, in which part of the unit is illustrated in an exploded manner. As illustrated in FIG. 5, the end capacitor unit 20E includes the capacitor 21 and the capacitor plate 22. The end capacitor unit 20E may further include the protective cover 23 (see FIG. 9) which will be described below, the insulation cover 14 (see FIG. 11), etc.

The capacitor 21 is a pair of capacitor substrates which are separately connected to the corresponding conductors 11L and 11R, respectively, and is formed, for example, in an approximately rectangular flat plate shape. In the example illustrated, the capacitor 21 has a component side 21 A on which an electronic component 210 that stores electric charge and a solder side 21B on the opposite side of the component side 21A. The capacitor-side connector 21C is provided at each of the both ends in the extending direction of the parallel transmission line 11, namely, a first end portion 211 including one end of the capacitor 21 and a vicinity thereof and a second end portion 212 including the other end opposite to the one end and a vicinity thereof.

In the capacitor plate 22, cavity 25 is formed along each of the external shapes of the capacitor substrates constituting the capacitor 21. The cavity 25 is filled with a filler S so as to seal the capacitor 21 and the connection unit C including the capacitor-side connector 21C, etc. Since the cavity 25 has approximately the same shape as the external shape of the capacitor 21, the capacitor 21, etc. can be sealed with only a small amount of the filler S. Instead of sealing with the filler S, the capacitor 21 and the connection unit C may be protected by covering with a cylindrical cover.

FIG. 6 is a diagram illustrating the capacitor substrates viewed from the side opposite to that of FIG. 5. FIG.6 illustrates an example of the capacitor 21 and the connection unit C thereof. As illustrated in FIG. 6, the connection unit C is provided on the component side 21A on which the electronic component 210 is mounted. In addition to the capacitor-side connector 21C, the connection unit C includes the end portions of the conductors 11L and 11R, the end portions of the end connector 11E, the fastening screw 7, etc. Each of the capacitor-side connectors 21C is configured to be connectable either to the parallel transmission line-side connector 11C provided at a terminal end of the parallel transmission line 11 or to the end connector 11E connecting the pair of adjacent capacitors 21.

FIG. 7 illustrates an example of the end portion of the conductor 11L. As illustrated in FIG. 7, the parallel transmission line-side connector 11C that is electrically connectable to the capacitor-side connector 21C is provided at each of the end portions of the conductors 11L and 11R. In the example illustrated, the flat plate-shaped parallel transmission line-side connector 11C having a through hole is formed. For example, by fixing the parallel transmission line-side connector 11C to the capacitor-side connector 21C with the fastening screw 7, the parallel transmission line 11 is electrically connected to the capacitor 21.

FIG. 8 is a perspective view of the capacitor plate 22 of the end capacitor unit 20E. As illustrated in FIG. 8, for example, the capacitor plate 22 is made of a resin material such as a polycarbonate resin and formed in a rectangular flat plate shape. The capacitor plate 22 has a first side 22A and a second side 22B which is on the opposite side of the first side 22A.

As described above, the cavity 25 is formed along each of the external shapes of the capacitor substrates of the capacitor 21 on the first side 22A. The cavity 25 includes a flange section 251 that supports the first side 22A of the capacitor 21, a center section 252 that is formed deeper than the flange section 251 to accommodate the electronic component 210, and an end section 253 that is formed even deeper than the center section 252 to accommodate the connection unit C.

The capacitor plate 22 of the end capacitor unit 20E further includes a communication section 254 that is formed along the external shape of the end connector 11E. For example, the communication section 254 is formed deeper than the flange section 251 and shallower than the center section 252. A cover seat 27 is formed along the end portion of the parallel transmission line unit 10 on the first side 22A. The insulation cover 14 (see FIG. 11) that covers interspace between the parallel transmission line unit 10 and the capacitor unit 20 is fixed to the cover seat 27.

FIG. 9 is an exploded sectional view of the capacitor unit 20 taken in the direction transverse to the parallel transmission line 11. As illustrated in FIG. 9, the capacitor 21 is attached to the capacitor plate 22 such that the component side 21A faces the cavity 25. After the capacitor 21 has been attached, the cavity 25 is filled with the filler, and the protective cover 23 is attached. The filler and the protective cover 23 protect the capacitor 21 and the connection unit C thereof from the outside. When the capacitor unit 20 has been assembled, the capacitor unit 20 is configured to have approximately the same thickness as that of the parallel transmission line unit 10.

FIG. 10 is a plan view of the end capacitor unit 20E in which the orientation of the capacitor 21 is inverted from that in FIG. 5 in the extending direction of the parallel transmission line 11. The capacitor-side connector 21C provided in the first end portion 211 of the capacitor 21 can be connected to the end connector 11E side as illustrated in FIG. 5 or to the parallel transmission line 11 side, which is connected to the power supply apparatus 4, as illustrated in FIG. 10. Likewise, the capacitor-side connector 21C provided in the second end portion 212 of the capacitor 21 is configured to be connectable either to the end connector 11E side as illustrated in FIG. 10 or to the power supply apparatus 4 side as illustrated in FIG. 5.

FIG. 11 is a plan view of the intermediate capacitor unit 20M of FIG. 3, in which part of the unit is illustrated in an exploded manner. The intermediate capacitor unit 20M has approximately the same shape and functions as those of the end capacitor unit 20E. Therefore, a redundant description of the intermediate capacitor unit 20M will be omitted. As illustrated in FIG. 11, the intermediate capacitor unit 20M is formed to have approximately the same shape even when rotated about the first side 22A by 180 degrees, therefore, there is no need to distinguish the front and rear thereof in the extending direction of the parallel transmission line 11.

FIG. 12 is a perspective view of the capacitor plate 22 of the intermediate capacitor unit 20M. The capacitor plate 22 of the intermediate capacitor unit 20M is formed to be approximately the same as the capacitor plate 22 of the end capacitor unit 20E, except for the communication section 254. As illustrated in FIG. 12, the cavity 25 that includes the flange section 251, the center section 252, and the end section 253 is formed in the capacitor plate 22 of the intermediate capacitor unit 20M.

According to the capacitor unit 20 configured as described above in the present embodiment, the capacitor 21 can compactly be arranged in the capacitor unit 20. Assuming that the capacitor 21 is accommodated in a big box or the like, since the box obstructs the traveling of the reception apparatus 3, the capacitor 21 would only be connected to the terminal end of the parallel transmission line 11. If fewer capacitors 21 were arranged, a higher voltage would be applied to the individual capacitors 21, which could result in damaging the capacitors 21.

In contrast, according to the present embodiment, since the capacitor 21 is compactly accommodated in the capacitor plate 22 having approximately the same thickness as that of the parallel transmission line unit 10, the traveling of the reception apparatus 3 will not be obstructed. Thus, the capacitor 21 can be connected to a desired location on the parallel transmission line 11 laid along the travelling route of the reception apparatus 3.

The above-described embodiment is merely for facilitating the understanding of the present invention and is not to be interpreted as limiting the present invention. The elements included in the embodiment and the arrangement, material, condition, shape, size, etc. thereof are not limited to those illustrated above, but can be appropriately modified. In addition, partial replacement or combination of configurations as described in different embodiments can be made.

- 1: Contactless power supply system
- 2: Power transmission apparatus
- 3: Power reception apparatus
- 4: Power supply apparatus
- 5: Coil
- 6: Load
- 7: Fastening screw
- 10: Parallel transmission line unit
- 11: Parallel transmission line
- 11C: Parallel transmission line-side connector
- 11E: End connector
- 11L, 11R: Conductor
- 12: Guide plate
- 13: Protective cover
- 14: Insulation cover
- 15: Cavity
- 16: Bending portion
- 20: Capacitor unit
- 21: Capacitor
- 21A: Component side
- 21B: Solder side
- 21C: Capacitor-side connector
- 22: Capacitor plate
- 22A: First side
- 22B: Second side
- 23: Protective cover
- 25: Cavity
- 27: Cover seat
- 210: Electronic component
- 211: First end portion
- 212: Second end portion
- 251: Flange section
- 252: Center section
- 253: End section
- 254: Communication section
- C: Connection unit
- D: Distance between conductors
- W: Width of bending portion

## Claims

1. A capacitor unit (20) comprising
a capacitor (21); and
a capacitor plate (22) in which a cavity (25) is formed,
wherein the cavity (25) accommodates the capacitor (21),
**characterized in that** the capacitor unit (20) is connected to a parallel transmission line (11) that comprises a pair of conductors (11L, 11R) extending parallel to each other and supplies power from a power supply apparatus (4) to an electric power reception side in a contactless manner, **in that** the capacitor (21) is connectable to the parallel transmission line (11), and **in that** the cavity (25) accommodates a connection unit (C) that connects the capacitor (21) and the parallel transmission line (11).

2. The capacitor unit (20) according to claim 1, wherein the cavity (25) is filled with a filler so as to seal the capacitor (21) and the connection unit (C).

3. The capacitor unit (20) according to claim 1 or 2, further comprising a protective cover (23) that is attached to the capacitor plate (22) and covers the cavity (25).

4. The capacitor unit (20) according to any one of claims 1 to 3,
wherein the capacitor (21) is a pair of capacitor substrates which are separately connected to the corresponding conductors (11L, 11R), respectively, and
a pair of the cavities (25) is formed along each of the external shapes of the capacitor substrates.

5. The capacitor unit (20) according to any one of claims 1 to 4,
wherein capacitor-side connectors (21C) are provided at one end of the capacitor (21) and the other end opposite to the one end, and
each of the capacitor-side connectors (21C) is configured to be connectable either to a parallel transmission line-side connector (11C) provided at a terminal end of the parallel transmission line (11) or to an end connector (11E) connecting a pair of adjacent capacitors (21).

6. The capacitor unit (20) according to claim 5, wherein each of the one end and the other end of the capacitor (21) is configured to be connectable either to a side of the power supply apparatus (4) or to a side of the end connector (11E) which is located on an opposite side of the power supply apparatus (4).

## Patentansprüche

1. Kondensatoreinheit (20) mit
einem Kondensator (21); und
einer Kondensatorplatte (22), in der ein Hohlraum (25) ausgebildet ist,
wobei der Hohlraum (25) den Kondensator (21) beherbergt,
**dadurch gekennzeichnet, dass** die Kondensatoreinheit (20) mit einer parallelen Übertragungsleitung (11) verbunden ist, die ein Paar parallel zueinander verlaufender elektrischer Leiter (11L, 11R) umfasst und Energie von einer Energieversorgungsvorrichtung (4) einer Empfangsseite für elektrische Energie berührungslos zuführt, dass der Kondensator (21) mit der parallelen Übertragungsleitung (11) verbunden werden kann, und dass der Hohlraum (25) eine Verbindungseinheit (C) beherbergt, die den Kondensator (21) und die parallele Übertragungsleitung (11) verbindet.

2. Kondensatoreinheit (20) nach Anspruch 1, wobei der Hohlraum (25) mit einem Füllstoff gefüllt ist, um den Kondensator (21) und die Verbindungseinheit (C) abzudichten.

3. Kondensatoreinheit (20) nach Anspruch 1 oder 2, ferner umfassend eine Schutzabdeckung (23), die an der Kondensatorplatte (22) befestigt ist und den Hohlraum (25) abdeckt.

4. Kondensatoreinheit (20) nach einem der Ansprüche 1 bis 3,
wobei der Kondensator (21) ein Paar von Kondensatorsubstraten ist, die jeweils separat mit den entsprechenden elektrischen Leitern (11L, 11R) verbunden sind, und
ein Paar der Hohlräume (25) gemäß jeder der äußeren Formen der Kondensatorsubstrate gebildet ist.

5. Kondensatoreinheit (20) nach einem der Ansprüche 1 bis 4,
wobei kondensatorseitige Verbinder (21C) an einem Ende des Kondensators (21) und dem anderen, zu dem einen Ende entgegengesetzten Ende, bereitgestellt sind, und
jeder der kondensatorseitigen Verbinder (21C) so konfiguriert ist, dass er entweder mit einem Verbinder (11C) an der Seite der parallelen Übertragungsleitung, der an einem Anschlussende der parallelen Übertragungsleitung (11) bereitgestellt ist, oder mit einem Endverbinder (11E), der ein Paar benachbarter Kondensatoren (21) verbindet, verbunden werden kann.

6. Kondensatoreinheit (20) nach Anspruch 5, wobei sowohl das eine Ende als auch das andere Ende des Kondensators (21) so konfiguriert ist, dass es entweder mit einer Seite der Energieversorgungsvorrichtung (4) oder mit einer Seite des Endverbinders (11E), der sich auf einer zu der Energieversorgungsvorrichtung (4) entgegengesetzten Seite befindet, verbunden werden kann.

## Revendications

1. Unité de condensateur (20) comprenant :
un condensateur (21) ; et
une plaque de condensateur (22) dans laquelle une cavité (25) est formée,
dans laquelle la cavité (25) loge le condensateur (21),
**caractérisée en ce que** l'unité de condensateur (20) est connectée à une ligne de transmission parallèle (11) qui comprend une paire de conducteurs (11L, 11R) s'étendant parallèlement l'un à l'autre et qui alimente une puissance depuis un appareil d'alimentation de puissance (4) jusqu'à un côté de réception de puissance électrique d'une manière sans contact, **en ce que** le condensateur (21) peut-être connecté à la ligne de transmission parallèle (11), et **en ce que** la cavité (25) loge une unité de connexion (C) qui connecte le condensateur (21) et la ligne de transmission parallèle (11).

2. Unité de condensateur (20) selon la revendication 1, dans laquelle la cavité (25) est remplie d'un matériau de remplissage de manière à étancher le condensateur (21) et l'unité de connexion (C).

3. Unité de condensateur (20) selon la revendication 1 ou 2, comprenant en outre un couvercle de protection (23) qui est attaché à la plaque de condensateur (22) et qui couvre la cavité (25).

4. Unité de condensateur (20) selon l'une quelconque des revendications 1 à 3,
dans laquelle le condensateur (21) est une paire de substrats de condensateurs qui sont connectés séparément aux conducteurs correspondants (11L, 11R), respectivement, et
une paire de cavités (25) est formée le long de chacune des formes externes des substrats de condensateurs.

5. Unité de condensateur (20) selon l'une quelconque des revendications 1 à 4,
dans laquelle les connecteurs côté condensateur (21C) sont prévus à une extrémité du condensateur (21) et à l'autre extrémité opposée à ladite une extrémité, et
chacun des connecteurs côté condensateur (21C) est configuré pour pouvoir être connecté soit à un connecteur (11C) côté ligne de transmission parallèle prévu à une extrémité terminale de la ligne de transmission parallèle (11), soit à un connecteur d'extrémité (11E) connectant une paire de condensateurs adjacents (21).

6. Unité de condensateur (20) selon la revendication 5, dans laquelle chaque extrémité parmi ladite une extrémité et l'autre extrémité du condensateur (21) est configurée pour pouvoir être connectée soit à un côté de l'appareil d'alimentation de puissance (4), soit à un côté du connecteur d'extrémité (11E) qui est situé sur un côté opposé de l'appareil d'alimentation de puissance (4).
